# EUROPÄISCHE PATENTSCHRIFT

(11) **EP 1 698 038 B1**
(45) Veröffentlichungstag und Bekanntmachung des Hinweises auf die Patenterteilung: **14.04.2010**
(21) Anmeldenummer: 04820803.7
(22) Anmeldetag: 23.11.2004
(51) Int. Cl.: H02J 17/00, H02J 5/00

(54) **Antrieb mit induktiver Versorgung über eine Wicklungsschleife eines Primärleiters**
Drive unit with inductive supply via a winding of a primary conductor
Unité propulsive avec alimentation inductive à l'aide d'une spire d'un conducteur primaire

(30) Priorität: 19.12.2003 DE 10360599
(43) Veröffentlichungstag der Anmeldung: 06.09.2006
(73) Patentinhaber: SEW-EURODRIVE GmbH & Co. KG, 76646 Bruchsal (DE)
(72) Erfinder: SIMON, Olaf, 76646 Bruchsal (DE); MAHLEIN, Jochen, 76139 Karlsruhe (DE); SCHMIDT, Josef, 76676 Graben-Neudorf (DE)
(86) Internationale Anmeldenummer: PCT/EP2004/013280
(87) Internationale Veröffentlichungsnummer: WO 2005/064764

(56) Entgegenhaltungen:
- DE-A1- 10 014 954
- DE-A1- 10 112 892
- GB-A- 2 100 069
- US-A- 5 293 308
- US-B1- 6 425 468

## Beschreibung

Die Erfindung betrifft einen Antrieb mit induktiver Versorgung über eine Wicklungsschleife eines Primärleiters und eine Anlage mit einem derartigen Antrieb.

In industriellen Anlagen ist bekannt, Antriebe aus einem Netz zu versorgen. Dazu sind die Antriebe meist mittels kostspieliger Steckverbinder angeschlossen. Außerdem weist die Anlage oder Maschine für jeden Antrieb ein T-Stück als Energieabzweigung auf. Diese T-Stücke sind aufwendig zu installieren und kostspielig, besonderes wenn sie in hoher Schutzart für den Nassbereich oder gar den aseptischen Bereich einsetzbar sein müssen.

Aus der GB 2 100 069 A ist ein Induktiv versorgter Wagen bekannt, bei dem drei Primärleiter stationär und langgestreckt und zueinander parallel verlegt sind und somit ein dreiphasiges Primärleitersystem vorgesehen ist, aus dem ein bewegbarer Wagen Induktiv versorgbar ist.

Aus der US 6 425 468 B1 ist ein induktives berührungsloses Energieübertragungssystem bekannt, das Kurvenfahrten ermöglicht.

Aus der US 5 293 308 A ist ein induktives berührungsloses Energieübertragungssystem bekannt, bei dem ein Abschalten des Sekundärteils mittels einer im Übertragungsbereich vorgesehenen Kurzschließbaren zusätzlichen Spule gemäß dortiger Figur 19 ausführbar ist. Alternativ wird das Abschalten gemäß Figur 23 mittels eines Kurzschließers 2301 oder ein Abschalten gemäß Figur 24 mittels eines Auftrenners 2401 im resonanten sekundärseitigen Teil ausgeführt. Diese Kurzschließer und Auftrenner werden dort auch als Entkoppelungsmlttel bezeichnet.

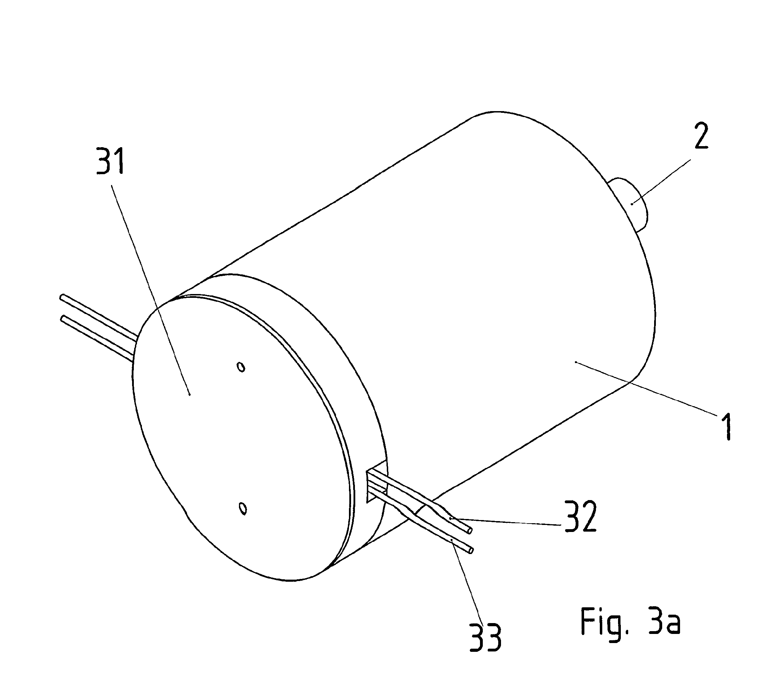

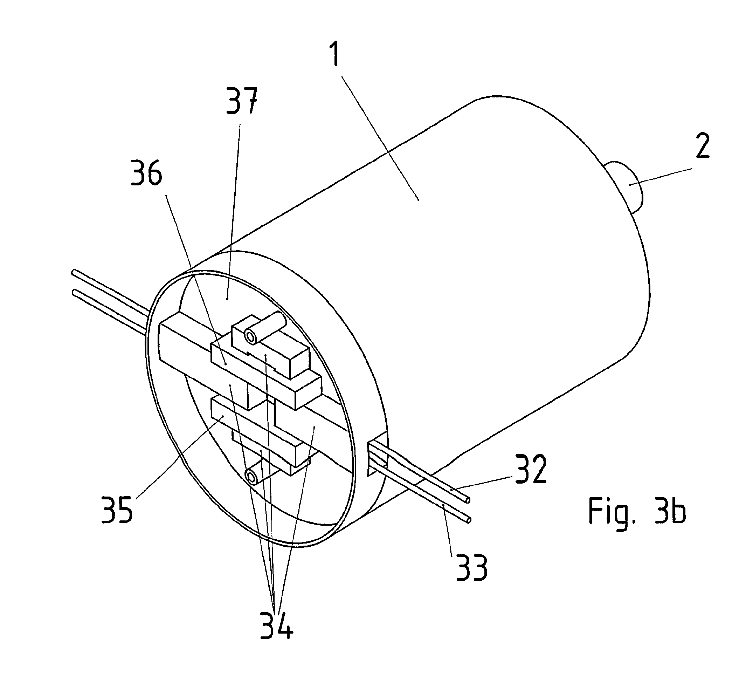

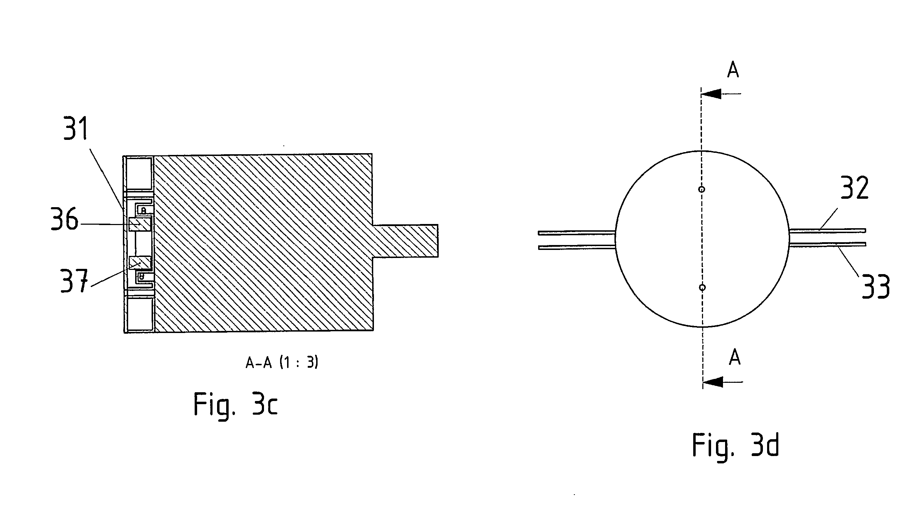

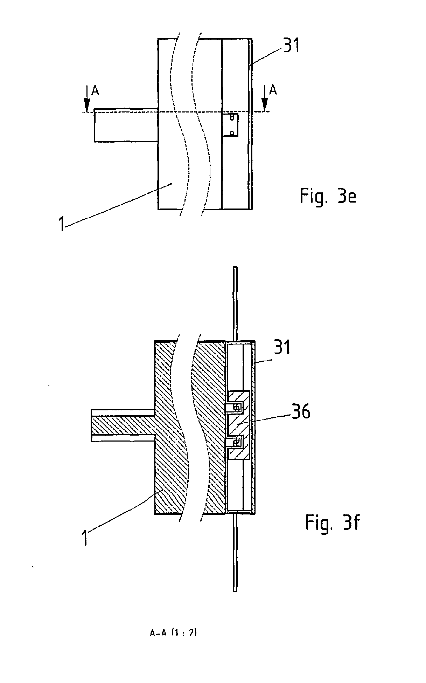

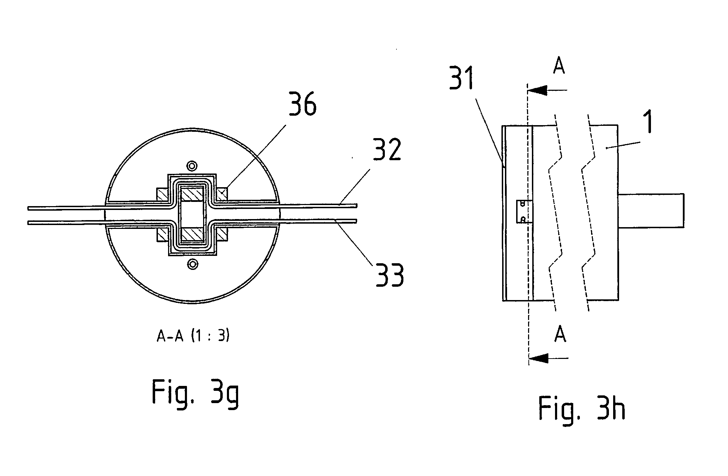

Aus der DE 101 12 892 A1 ist ein induktives berührungsloses Energieübertragungssystem, bei dem gemäß Figur 3 ein U-förmiger Kern und gemäß Figur 6 ein E-förmiger Kern verwendet wird.

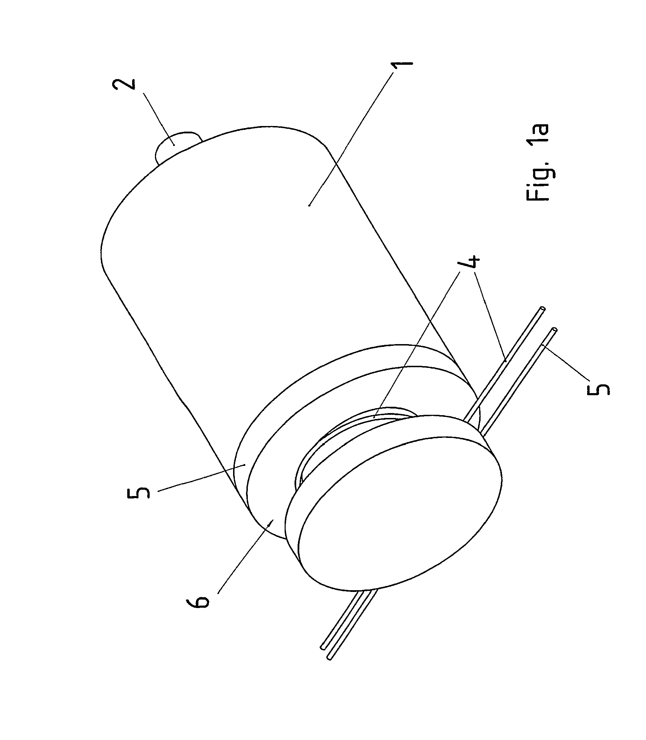

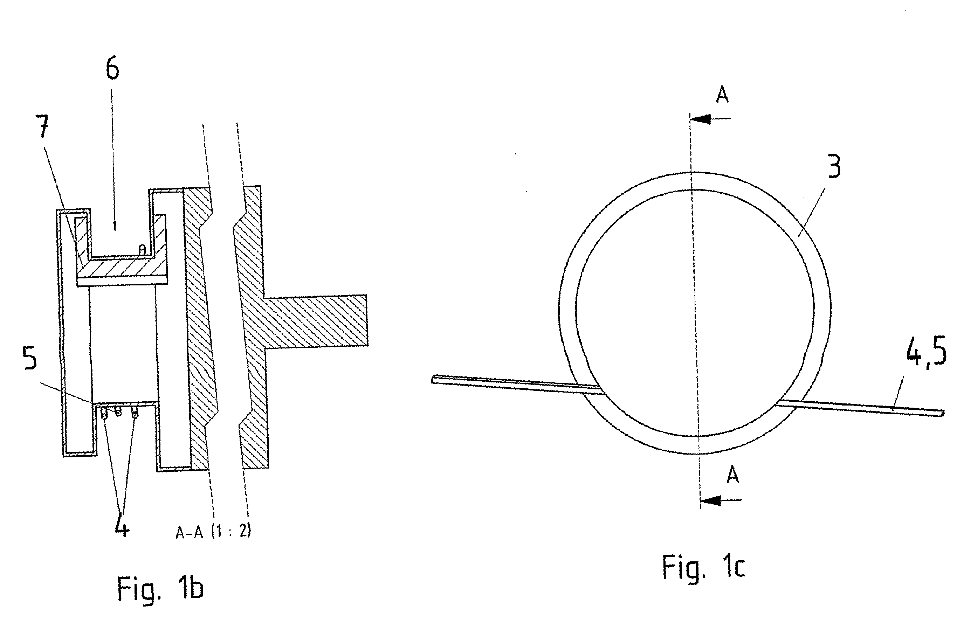

Aus der DE 100 14 954 A1 ist ein induktives berührungsloses Energieübertragungssystem für eine Elektrohängebahn bekannt, bei dem gemäß Figur 1 ein U-förmlger Kern verwendet wird.

Der Erfindung liegt die Aufgabe zugrunde, eine einfachere und kostengünstigere Verkabelung bei Antrieben und Anlagen zu schaffen.

Erfindungsgemäß wird die Aufgabe bei dem Antrieb nach den in Anspruch 1 und bei der Anlage nach den in Anspruch 2 angegebenen Merkmalen gelöst.

Wichtige Merkmale bei dem Antrieb sind, dass er einen Elektromotor mit Rotorwelle umfasst,
wobei das Gehäuse des Antriebs im Bereich eines im Querschnitt U-förmigen Kerns eine Vertiefung aufweist,
in welcher ein Primärleiter eingelegt ist mit einer Wicklungsschleife,
wobei ein als Rückleiter ausgebildeter Primärleiter lediglich durchgeschleift ist.

Wichtige Merkmale der Erfindung bei der Anlage sind, dass sie Antriebe umfasst, die auf einem bewegbaren Teil, insbesondere Drehtisch oder Lineartrieb, berührungslos versorgt sind mittels jeweiliger induktiver Kopplung an einen oder mehrere Primärleiter. Von Vorteil ist dabei, dass die Verkabelung schnell und einfach ausführbar ist und außerdem übersichtlich vorsehbar ist. Darüber hinaus ist die Anlage in Nassbereichen und in aseptischen Bereichen einsetzbar, da die induktive Kopplung ermöglicht, dass das Gehäuse glatt ausführbar ist. Außerdem ist eine verschleißfreie Übertragung von Energie vorhanden.

Weiter ist von Vorteil, dass die Einspeisung zu den Antrieben potentialfrei ist und die sonst in Anlagen vorhandene Potentialverschleppung sowie Funkentstörmittel bei Trennschaltern entfallen. Außerdem ist eine Blindleistungskompensation, insbesondere im Antrieb, ermöglicht und somit weist der Wechselstrom kleinere Werte auf, weshalb dann auch kleinere Leitungsdurchmesser beim Primärleiter vorsehbar sind und somit geringere Verkabelungskosten erreichbar sind.

Trennschalter sind entbehrlich, da ein Auftrennen durch ein Herausziehen des Primärleiters ersetzbar ist.

Bei einer vorteilhaften Ausgestaltung ist das Teil drehbar gelagert oder linear bewegbar. Von Vorteil ist dabei, dass die Anlage als Drehtisch oder als Linearantrieb ausführbar ist.

Bei einer vorteilhaften Ausgestaltung versorgt der Primärleiter die Antriebe seriell. Von Vorteil ist dabei, dass keine T-Stücke notwendig sind und somit eine sehr kostengünstige Verkabelung, insbesondere ohne Steckverbinder und dergleichen, ausführbar ist.

Bei einer vorteilhaften Ausgestaltung ist der Primärleiter über stationäre, mindestens eine Spulenwicklung umfassende Spulenkerne berührungslos oder über Schleifleitung mit Energie versorgt. Von Vorteil ist bei der berührungslosen Übertragung, dass der bewegbare Teil wiederum in Nassbereichen oder aseptischen Bereichen einsetzbar ist und kein Verschleiß auftritt.

Bei einer vorteilhaften Ausgestaltung ist der Primärleiter als geschlossene Schleife verlegt. Von Vorteil ist dabei, dass er besonders kostengünstig ist und keine Anfangs- oder Endstücke notwendig sind.

Bei einer vorteilhaften Ausgestaltung umfasst mindestens ein Antrieb einen Elektromotor und eine elektronische Schaltung zur Versorgung des Elektromotors, wobei der Antrieb induktiv versorgbar ist. Von Vorteil ist dabei, dass der Antrieb dicht und in hoher Schutzart in kostengünstiger Weise ausführbar ist. Die berührungslose Versorgung des Antriebs ermöglicht nämlich das Gehäuse einfach und schlicht, insbesondere ohne Unebenheiten oder Steckverbinder, auszuführen und somit ein Abfließen von Wasser zu ermöglichen sowie das Festsetzen von Feststoffen zu verhindern. Insbesondere ist er somit in Nassbereichen und aseptischen Bereichen einsetzbar. Die Zeit, welche für das Verkabeln notwendig ist, ist mit der Erfindung reduzierbar.

Bei einer vorteilhaften Ausgestaltung ist ein Primärleiter derart am Antrieb vorgesehen, dass eine induktive Kopplung mit einer vom Antrieb umfassten Sekundärwicklung vorsehbar ist. Von Vorteil ist dabei, dass kein Steckverbinder notwendig ist und somit die Verkabelung schnell und einfach ausführbar ist. Außerdem sind Kosten einsparbar.

Bei einer vorteilhaften Ausgestaltung ist mindestens ein Primärleiter in einer Vertiefung oder einem Kabelkanal des Antriebs vorgesehen. Von Vorteil ist dabei, dass die Kabelverlegung sehr schnell und einfach ausführbar ist und zusätzlich ein Vergießen mit einer Vergussmasse vorteilig ausführbar ist.

Bei einer vorteilhaften Ausgestaltung ist mindestens eine Sekundärwicklung um einen U-förmigen und/oder E-förmigen Kern gewickelt. Von Vorteil ist dabei, dass je nach verwendetem Verfahren und gewünschtem Wirkungsgrad die Ausführung wählbar ist.

Bei einer vorteilhaften Ausgestaltung sind die Primärleiter mindestens teilweise vergossen und/oder mittels eines Deckels geschützt. Von Vorteil ist dabei, dass eine besonders hohe Schutzart erreichbar ist.

Bei einer vorteilhaften Ausgestaltung ist der Antrieb dicht, an der äußeren Oberfläche glatt und/oder in hoher Schutzart ausgeführt. Von Vorteil ist dabei, dass der Antrieb insbesondere zum Einsatz in Nassbereichen und/oder aseptischen Bereichen vorsehbar ist.

Bei einer vorteilhaften Ausgestaltung umfasst der Antrieb keinen Steckverbinder oder andere elektrische Anschlussvorrichtungen an seinem Äußeren. Von Vorteil ist dabei wiederum, dass der Antrieb in einfacher Weise dicht und in hoher Schutzart ausführbar ist.

Weitere Vorteile ergeben sich aus den Unteransprüchen.

### Bezugszeichenliste

- 1: Gehäuse
- 2: Rotorwelle
- 3: Gehäuseteil
- 4: Primärleiter
- 5: Primärleiter
- 6: Vertiefung
- 7: Kern mit U-förmigem Querschnitt
- 21: Primärleiter
- 22: Primärleiter
- 23: Schelle
- 24: Vertiefung
- 25: Vertiefung
- 26: Gehäuseteil
- 27: Kern mit U-förmigem Querschnitt
- 28: zweiter Kern mit U-förmigem Querschnitt
- 31: Deckel
- 32: Primärleiter
- 33: Primärleiter
- 34: Kabelkanal
- 35: Kern mit E-förmigem Profil
- 36: Kern mit E-förmigem Profil
- 37: Platine
- 41: Drehtisch
- 42: Drehtischantrieb
- 43: Primärleiter
- 44: Antrieb
- 45: stationäre Spulenkerne

Die Erfindung wird nun anhand von Abbildungen näher erläutert:

In den Figuren 1a, 1b und 1c ist ein erfindungsgemäßer Antrieb in isometrischer Ansicht, in Schnittansicht und Draufsicht gezeigt. Der Antrieb umfasst einen Elektromotor mit Rotorwelle 2, der von einem Gehäuse 1 umgeben ist. Die elektronische Schaltung zur Versorgung und Steuerung des Elektromotors ist im Wesentlichen vom Gehäuseteil 3 geschützt, das eine Vertiefung 6 aufweist, in welcher ein Primärleiter eingelegt ist mit einer Wicklungsschleife. Die Rückleitung, also der zweite Primärleiter ist nur durchgeführt, also nicht um den Antrieb herum gewickelt.

Das Gehäuseteil 3 umfasst einen Kern 7 mit U-förmigem Querschnitt, um den eine Sekundärwicklung gelegt ist, die die elektronische Schaltung versorgt. Somit ist der Antrieb berührungslos versorgbar mittels der induktiven Koppelung und somit galvanisch getrennt vom Primärkreis. Ein Abtrennen der Versorgung des Antriebs ist durch ein Abwickeln oder Herunternehmen der Schleife des Primärleiters schnell und einfach ermöglicht.

Die Speisung des Primärkreises erfolgt durch eine Vorrichtung, die Stromquellenverhalten bezüglich des von ihr erzeugten Primärstroms aufweist.

In weiteren erfindungsgemäßen Ausführungsbeispielen wird Information durch Aufmodulation von höherfrequenten Signalen auf den Primärleiter übertragen, indem die elektronische Schaltung Mittel zur Demodulation der Signale umfasst. Zum Austausch von Informationen umfasst die elektronische Schaltung auch Mittel zurAufmodulation, wodurch dann auch Signale auf den Primärleiter aufmodulierbar sind.

Auf diese Weise ist der Antrieb berührungslos versorgbar. Dies hat zur Folge, dass ein neuartiges Versorgungsprinzip in industriellen Anlagen und/oder Maschinen verwirklichbar ist. Denn bei der Installation der Antriebe müssen diese nun nicht mehr mit kostspieligen Steckverbindern elektrisch verbunden und verkabelt werden sondern es genügt eine Umwicklung eines Primärleiters in der Vertiefung des Antriebs.

Außerdem ist eine hohe Schutzart realisierbar, da Steckverbinder entfallen und somit der Antrieb mit seinem Gehäuse in kostengünstiger Weise dicht herstellbar ist. Somit ist der Antrieb insbesondere mit einem glatten Gehäuse herstellbar und somit im Aseptikbereich oder Nassbereich verwendbar.

Mittel zur Potentialtrennung und andere Trenneinrichtungen sind einsparbar, da die Gehäusewanddicke entsprechend dimensionierbar ist und die induktive Ankoppelung leicht trennbar ist.

Die elektronische Schaltung umfasst selbstverständlich auch die sekundärseitigen Mittel für die induktive, also berührungslose Energieübertragung. Bei vorteilhafter Ausführung sind diese Mittel vorteiligerweise passive Bauteile, also Kondensatoren und Wicklungen um Spulenkerne. In einfachster Ausführung ist der Übertragerkopf mit einer Wicklung als Sekundärwicklung umwickelt und ein Kondensator nachgeschaltet, dessen Kapazität mit der Induktivität der Wicklung in Resonanz ist, wobei die Resonanzfrequenz der Frequenz des Wechselstromes im Primärleiter entspricht oder nicht mehr als 10 % abweicht.

Die Antriebe sind seriell mit dem Primärleiter versorgbar. Das Auskoppeln einzelner Motoren ist ermöglicht, ohne dass die Energieversorgung der anderen unterbrochen werden muss. Es ist lediglich nötig, dass die Primärleiter-Leiterschleife um den Antrieb gelöst wird, beispielsweise durch ein Herausheben der Leiterschleife aus der Vertiefung.

Bei der erfindungsgemäßen Verkabelung entfallen T-Stücke.

Der Antrieb ist in den Figuren 1a, 1b und 1c als rotorischer Antrieb gezeichnet. In anderen erfindungsgemäßen Ausführungsbeispielen wird der Antrieb als Linearantrieb ausgeführt und induktiv versorgt.

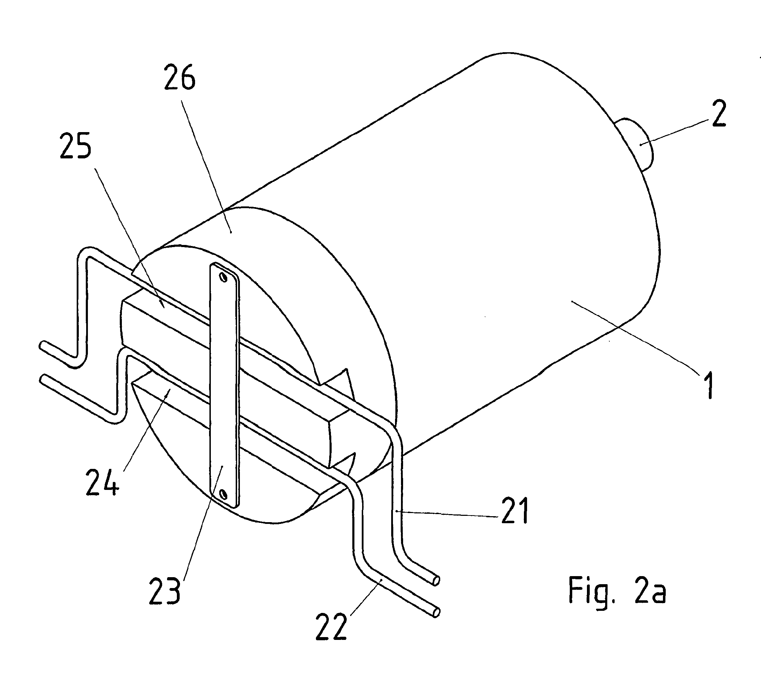

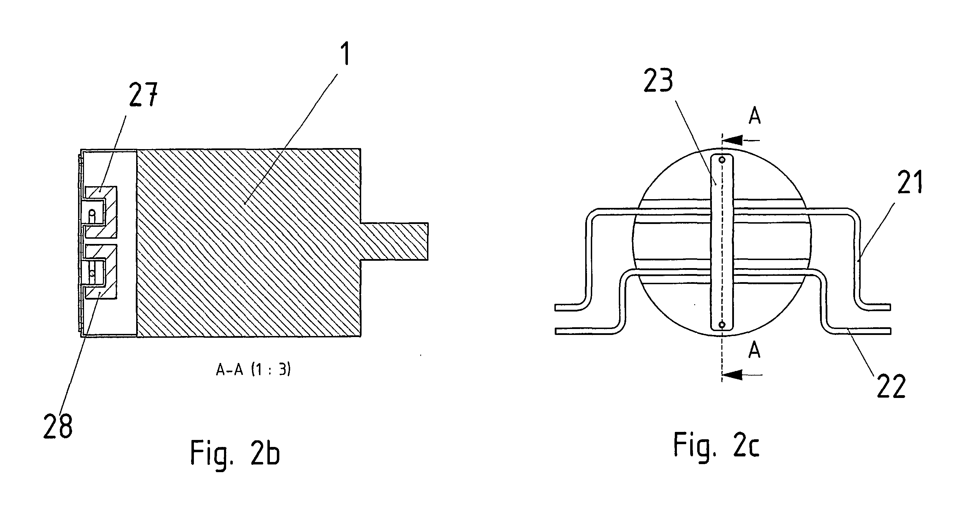

In den Figuren 2a, 2b, 2c, 3a, 3b, 3c, 3d, 3e, 3f, 3g, 3h sind technische Beispiele gezeigt, die nicht Gegenstand der Erfindung sind.

So befinden sich gemäß den Figuren 2a, 2b, 2c für Antriebe an der B-Seite Kerne 27, 28 mit U-förmigem Querschnitt bei Vertiefungen für die Primärleiter 21 und 22. Eine Schelle 23 dient zur Fixierung der Primärleiter in ihren Vertiefungen. Für die Funktion ist nur ein Kern 27 notwendig. Der weitere Kern 28 erhöht den Wirkungsgrad der gesamten Vorrichtung. Die Sekundärwicklungen auf den beiden Kernen 27,28 sind zusammengeschaltet und versorgen die elektronische Schaltung, die wiederum im Bereich des Gehäusedeckels 26 angeordnet ist, der B-seitig am Gehäuse 1 vorgesehen ist.

Gemäß den Figuren 3a, 3b, 3c, 3d, 3e, 3f, 3g, 3h, welche verschiedene Ansichten, teilweise mit Ausblendung von Materialkomponenten wie in Figur 3b gezeigt, darstellen, ist der erste Primärleiter 32 in einem Kabelkanal 34 geführt, der in einer Halbschleife nach oben vorgesehen ist. Der zweite Primärleiter 33 wird in einer entsprechenden Halbschleife nach unten geführt. Zur induktiven Kopplung sind ein E-förmiger Kern 36 in der oberen Halbschleife und ein zweiter E-förmiger Kern 35 in der unteren Halbschleife vorgesehen, insbesondere im Material des Deckels. Die E-förmigen Kerne sind mit ihren Schenkeln des E an das Gehäuseteil 37 herangeführt. Das Gehäuseteil 37 schützt eine Platine, welche als Leiterbahnen ausgeführte spiralförmig verlaufende Wicklungen trägt, die als Sekundärwicklungen vorgesehen sind. Insbesondere ist ein flacher E-förmiger Kern auf diese Platine derart aufgesetzt und derart orientiert, dass dessen Schenkel in Verlängerung die Schenkel des E-förmigen Kerns 36 treffen. Somit ist eine sehr gute induktive Kopplung erreichbar, wie in Figur 3i angedeutet. Die Platine ist auch bestückbar mit weiteren elektronischen Bauelementen.

Der in Figur 3a gezeigte Deckel 31 ist für mechanische Schutzfunktion und als Klemmeinrichtung, also Zugentlastung, vorgesehen. In der Figur 3b ist Material des Deckels 31 weggelassen, so dass die E-förmigen Kerne 35, 36 sichtbar sind und auch die Kabelkanäle 34. Der Deckel ist mit dem Gehäuse 1 lösbar verschraubbar.

In weiteren technischen Beispielen umfasst dieser Deckel magnetisch leitendes Material zur verbesserten Energieeinkopplung. Insbesondere ist dieses Material auch vorteiligerweise U- oder E-förmig geformt.

In weiteren technischen Beispielen werden die Primärleiter 32, 33 in den Kabelkanälen mit Vergussmasse zur Fixierung und Abdichtung vorgesehen.

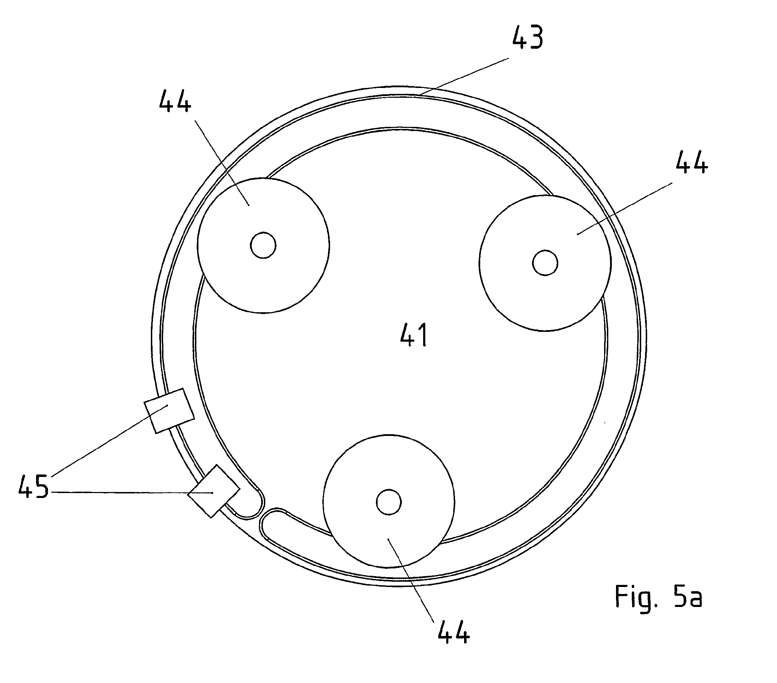

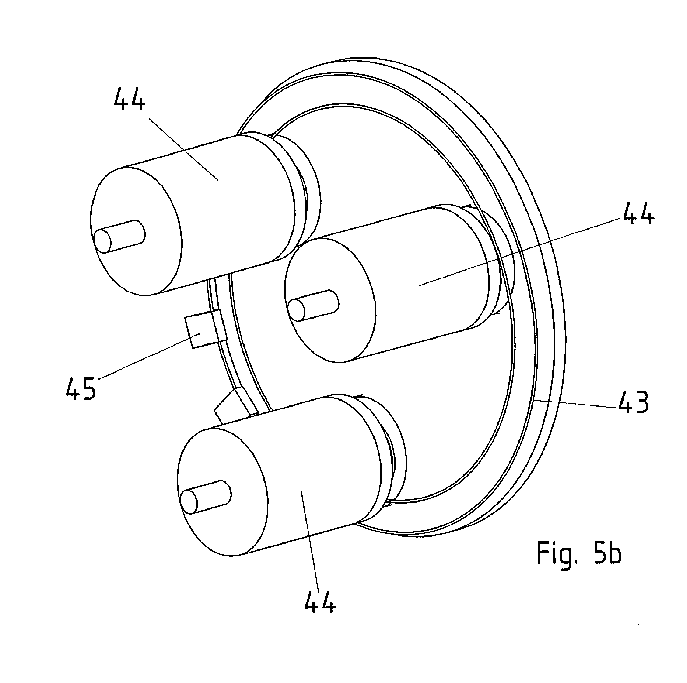

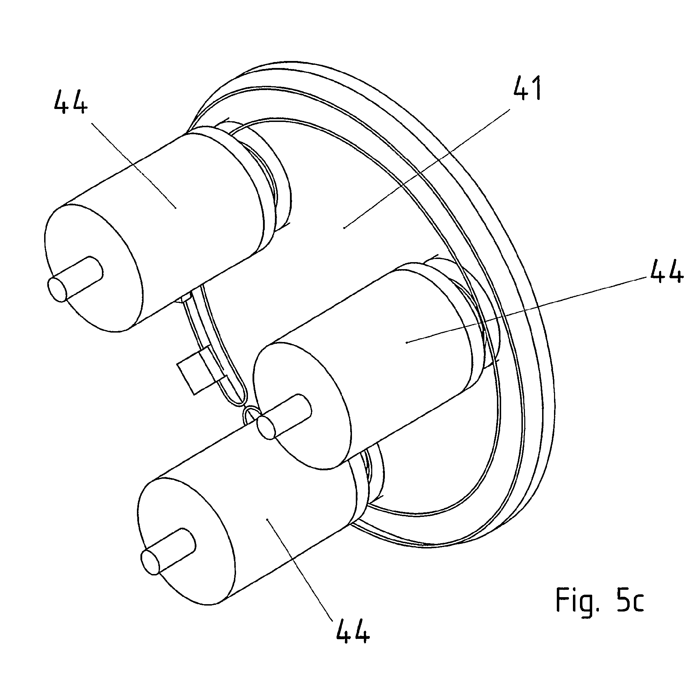

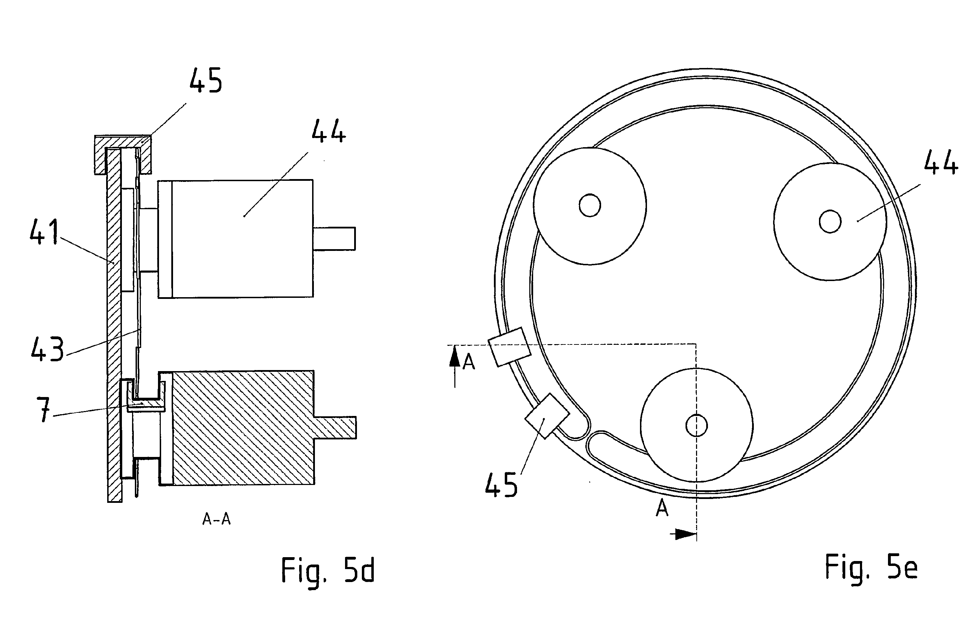

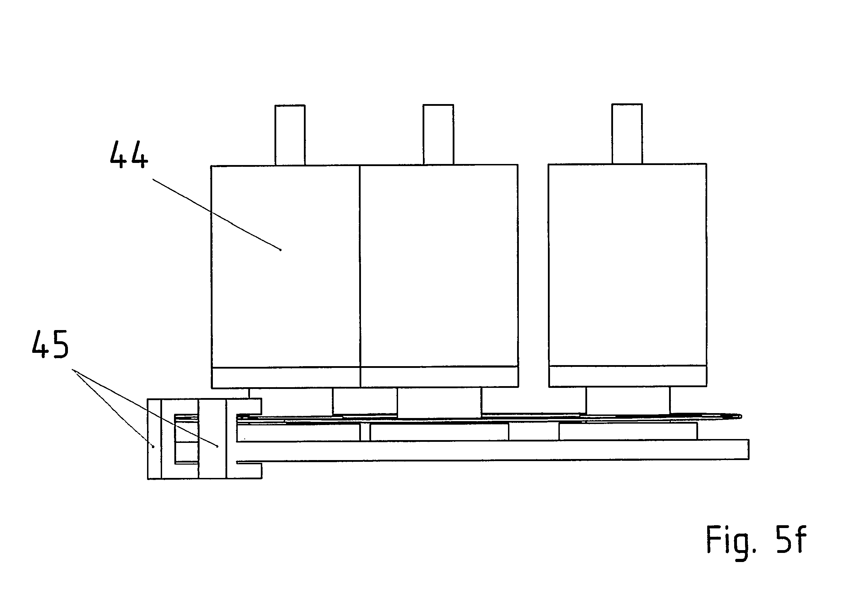

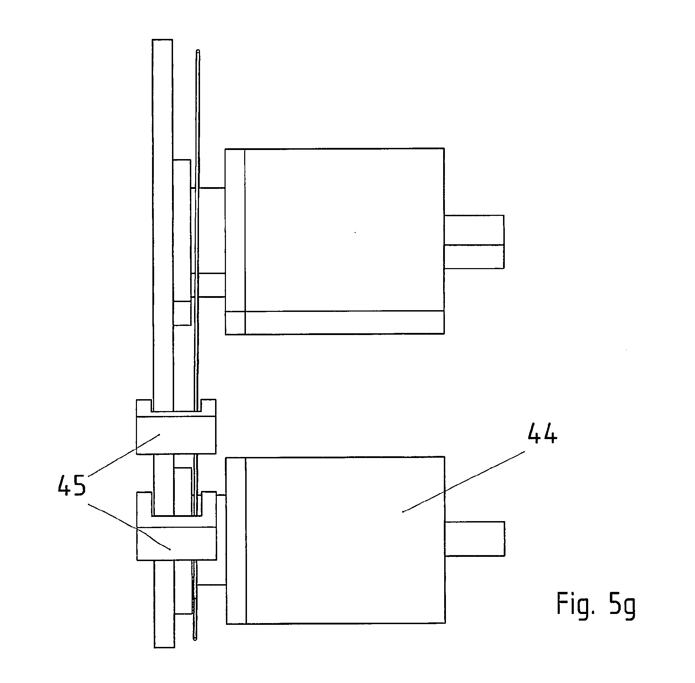

In den Figuren 5a, 5b, 5c, 5d, 5e, 5f und 5g sind verschieden Ansichten einer industriellen erfindungsgemäßen Anlage gezeigt, die erfindungsgemäße Antriebe umfasst.

Dabei ist ein vom Drehtischantrieb 42 angetriebener Drehtisch 41 relativ drehbar zu stationären Spulenkerne 45, die eine Spule tragen zur Erzeugung eines mittelfrequenten Wechselfeldes. Der Primärleiter führt durch den stationären Spulenkern 45 hindurch und ist somit induktiv gekoppelt an die Spule. Auf diese Weise ist Energie berührungslos von der spule auf den Primärleiter 43 übertragbar, der wiederum zu den Antrieben 44 führt und diese ebenfalls berührungslos versorgt. Wesentlicher Vorteil ist, dass somit im Nassbereich oder aseptischen Bereich oder in der Nahrungs- und Genussmittelindustrie die Anlage in besonders hoher Schutzart und leicht reinigbar ausführbar ist. Außerdem ist der Primärleiter einfach und schnell installierbar und somit die Herstellkosten und Wartungskosten der gesamten Anlage reduzierbar.

Insbesondere ist der Primärleiter in einer geschlossenen Bahn verlegt und ist um jeden Antrieb einmal herumgewickelt.

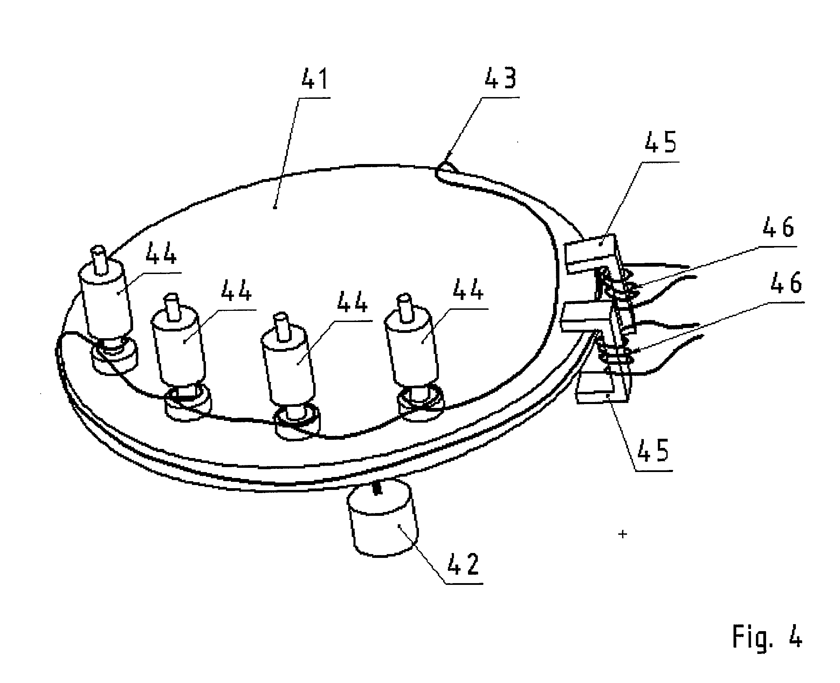

Ein entsprechendes weiteres erfindungsgemäßes Ausführungsbeispiel ist in Figur 4 gezeigt.

In weiteren erfindungsgemäßen Ausführungsbeispielen ist der Primärleiter mehrfach um einen Antrieb 44 herumgewickelt.

In anderen erfindungsgemäßen Ausführungsbeispielen ist statt der berührungslosen Versorgung des Primärleiters 43 eine Versorgung mittels Schleifleitung vorgesehen.

In den Figuren 4 und 5 sind die Antriebe auf einen Drehtisch 41 aufgesetzt gezeigt. Es ist jedoch bei anderen erfindungsgemäßen Ausführungsbeispielen auch vorgesehen, die Antriebe unter dem Drehtisch oder an anderen Stellen zu positionieren.

In anderen erfindungsgemäßen Ausführungsbeispielen wird statt des Drehtisches ein linear beweglicher Tisch vorgesehen, auf dem die Antriebe positioniert sind. Die Spulenkerne sind dann entlang der Bewegungsstrecke angeordnet und versorgen den im Wesentlichen linear verlegten Primärleiter.

Das Verfahren zur berührungslosen Energieübertragung und die zugehörigen Komponenten sind bei vorteilhaften Ausführungsformen vorteiligerweise ausführbar gemäß der in den Schriften DE 100 53 373, DE 103 12 284, DE 103 12 792, DE 103 39 340, DE 103 38 852, DE 103 49 242, DE 103 44 144, DE 4446 779 oder auch WO 92/17929 offenbarten Merkmale. Dabei ist besonders vorteilig die Verwendung einer Mittelfrequenz von etwa 15 bis 30 kHz. Die auf den Übertragerkopf, umfassend den Spulenkern, folgende Anpassschaltung ist besonders vorteilhaft passiv ausführbar, also ohne elektronische Leistungshalbleiter.

## Patentansprüche

1. Antrieb, umfassend einen Elektromotor mit Rotorwelle (2),
wobei das Gehäuse (1) des Antriebs im Bereich eines im Querschnitt U-förmigen Kerns eine Vertiefung (6) aufweist,
in welcher ein Primärleiter (4) mit einer Wicklungsschleife eingelegt ist,
wobei ein als Rückleiter ausgebildeter Primärleiter (5) lediglich durchgeschleift ist und
wobei um den U-förmigen Kern eine Sekundärwicklung gelegt ist, mittels welcher der Antrieb berührungslos induktiv versorgt ist.

2. Anlage mit Antrieben nach Anspruch 1,
**dadurch gekennzeichnet, dass**
Antriebe (44) auf einem bewegbaren Teil, insbesondere Drehtisch (41) oder Lineartrieb, berührungslos versorgt sind mittels jeweiliger induktiver Kopplung an einen oder mehrere Primärleiter (43).

3. Anlage nach Anspruch 2,
**dadurch gekennzeichnet, dass**
das Teil drehbar gelagert oder linear bewegbar ist.

4. Anlage nach mindestens einem der Ansprüche 2 oder 3,
**dadurch gekennzeichnet, dass**
der Primärleiter (43) die Antriebe (44) seriell versorgt.

5. Anlage nach mindestens einem der Ansprüche 2 bis 4,
**dadurch gekennzeichnet, dass**
der Primärleiter (43) über stationäre, mindestens eine Spulenwicklung umfassende Spulenkerne (45) berührungslos oder über Schleifleitung mit Energie versorgt ist.

6. Anlage nach mindestens einem der Ansprüche 2 bis 5,
**dadurch gekennzeichnet, dass**
der Primärleiter (43) als geschlossene Schleife verlegt ist.

7. Anlage nach mindestens einem der Ansprüche 2 bis 6,
**dadurch gekennzeichnet, dass**
jeder Antrieb (44) eine elektronische Schaltung zur Versorgung des Elektromotors umfasst.

8. Anlage nach mindestens einem der Ansprüche 2 bis 7,
**dadurch gekennzeichnet, dass**
der Antrieb (44) derart gestaltet ist, dass Formation durch Aufmodulation von höherfrequenten Signalen auf den Primärleiter (43) übertragbar ist.

## Claims

1. A drive, comprising an electric motor with a rotor shaft (2),
wherein the housing (1) of the drive has a recess (6) in the region of a core with a U-shaped cross-section,
a primary conductor (4) with a winding loop being inlaid in the said recess (6),
wherein a primary conductor (5) designed in the form of a return conductor is merely looped through, and
wherein a secondary winding, by means of which the drive is supplied in an inductive manner without contact, is laid around the U-shaped core.

2. An arrangement with drives according to Claim 1, **characterized in that** drives (44) on a movable part, in particular a turntable (41) or a linear drive, are supplied without contact by means of a respective inductive coupling to one or more primary conductors (43).

3. An arrangement according to Claim 2, **characterized in that** the part is mounted so as to be rotatable or is movable in a linear manner.

4. An arrangement according to at least one of Claims 2 or 3, **characterized in that** the primary conductor (43) supplies the drives (44) in series.

5. An arrangement according to at least one of Claims 2 to 4, **characterized in that** the primary conductor (43) is supplied with energy by way of conductor lines or without contact by way of stationary coil cores (45) comprising at least one coil winding.

6. An arrangement according to at least one of Claims 2 to 5, **characterized in that** the primary conductor (43) is laid in the form of a closed loop.

7. An arrangement according to at least one of Claims 2 to 6, **characterized in that** each drive (44) comprises an electronic circuit for supplying the electric motor.

8. An arrangement according to at least one of Claims 2 to 7, **characterized in that** the drive (44) is arranged in such a way that information is capable of being transmitted to the primary conductor (43) by the modulation of higher-frequency signals.

## Revendications

1. Entraînement comprenant un moteur électrique avec un arbre de rotor (2),
le carter (1) de l'entraînement présentant au niveau d'un noyau en forme de U en section transversale un renfoncement (6)
dans lequel est logé un conducteur primaire (4) avec une boucle d'enroulement,
un conducteur primaire (5) conçu comme conducteur de retour étant simplement transmis et
un enroulement secondaire étant posé autour du noyau en forme de U, au moyen duquel l'entraînement est alimenté inductivement sans contact.

2. Installation avec des entraînements selon la revendication 1,
**caractérisée en ce que**
des entraînements (44) sur une partie mobile, en particulier une table tournante (41) ou un entraînement linéaire, sont alimentés sans contact au moyen d'un couplage inductif respectif avec un ou plusieurs conducteur(s) primaire(s) (43).

3. Installation selon la revendication 2,
**caractérisée en ce que**
la pièce est montée tournante ou mobile linéairement.

4. Installation selon au moins une des revendications 2 ou 3,
**caractérisée en ce que**
le conducteur primaire (43) alimente les entraînements (44) en série.

5. Installation selon au moins une des revendications 2 à 4,
**caractérisée en ce que**
le conducteur primaire (43) est alimenté en énergie sans contact par l'intermédiaire de noyaux de bobine (45) comprenant au moins un enroulement de bobine ou par l'intermédiaire d'une ligne de contact.

6. Installation selon au moins une des revendications 2 à 5,
**caractérisée en ce que**
le conducteur primaire (43) est posé sous forme de boucle fermée.

7. Installation selon au moins une des revendications 2 à 6,
**caractérisée en ce que**
chaque entraînement (44) comprend un circuit électronique pour alimenter le moteur électrique.

8. Installation selon au moins une des revendications 2 à 7,
**caractérisée en ce que**
l'entraînement (44) est conçu de manière que des informations puissent être transmises au conducteur primaire (43) par modulation sur celui-ci de signaux à haute fréquence.
